# NEUE EUROPÄISCHE PATENTSCHRIFT

(11) **EP 0 732 048 B2**
(45) Veröffentlichungstag und Bekanntmachung des Hinweises auf die Entscheidung über den Einspruch: **25.09.2002**
(45) Hinweis auf die Patenterteilung: 16.06.1999
(21) Anmeldenummer: 96102556.6
(22) Anmeldetag: 21.02.1996
(51) Int. Cl.: A01F 15/08

(54) **Kolbensammelpresse für landwirtschaftliches Erntegut**
Pick-up piston press for agricultural product
Presse-ramasseuse à piston pour produits agricoles

(30) Priorität: 16.03.1995 DE 29504531 U; 01.02.1996 DE 29601671 U
(43) Veröffentlichungstag der Anmeldung: 18.09.1996
(73) Patentinhaber: CLAAS KGaA, 33428 Harsewinkel (DE)
(72) Erfinder: Tertilt, Werner, D-33428 Harsewinkel (DE); Hawlas, Martin, D-33428 Harsewinkel (DE)

(56) Entgegenhaltungen:
- WO-A-82/01298
- BE-A- 668 196
- DE-A- 2 029 866
- FR-A- 2 560 404

## Beschreibung

Die Erfindung betrifft eine Kolbensammelpresse für landwirtschaftliches Erntegut mit zumindest einem Getriebe, dessen Eingangswelle über eine Schwungmasse mit der Antriebswelle des Zugfahrzeuges verbindbar ist, mit einem Kurbeltrieb zum Antrieb des Preßkolbens und mit zwei Abtriebswellen, von denen eine den Raffer und die andere die das Erntegut zum Raffer führenden Zubringerorgane antreibt und beide Abtriebswellen unter Zwischenschaltung je einer Überlastkupplung mit dem Getriebe verbunden sind. Eine solche Presse ist aus DE-A-2029866 bekannt.

Zudem ist der Oberbegriff des Anspruchs 1 auch aus dem Prospekt der Fa. welger "Großballenpressen D 4000", A bekannt.

Es ist bekannt, Kolbensammelpressen gegen Überlast abzusichern. Zu diesem Zweck wird zunächst in den Antriebsstrang vom Zugfahrzeug zur Schwungmasse eine Rutschkupplung vorgesehen. Diese Kupplung dient aber nicht in erster Linie der Überlastsicherung der Presse sondern vielmehr dem Schutz des Antriebes des Zugfahrzeuges vor der Wirkung der Schwungmasse. Dem eigentlichen Überlastschutz der Presse selbst dient eine Kupplung, die zwischen der Schwungmasse und dem Getriebe der Kolbensammelpresse angeordnet ist. Eine derartige Kupplung kann beispielsweise eine Scherstiftkupplung sein. Eine solche Kupplung unterbricht den Antriebsstrang von der Schwungmasse zum Getriebe dann, wenn die gesamte Presse überlastet ist. Als Nachteil einer solchen bekannten Überlastsicherung für eine Kolbensammelpresse hat sich in der Praxis herausgestellt, daß diese nicht ausreicht, einzelne Organe gegen Überbeanspruchung wirksam zu schützen.

Der vorliegenden Erfindung liegt dabei ausgehend von einer Kolbensammelpresse der eingangs näher bezeichneten Art die Aufgabe zugrunde, die dem Getriebe nachgeschalteten einzelnen Bearbeitungsorgane zum einen wirksam gegen Überbelastung zu sichern und zum anderen Sorge dafür zu tragen, daß auch das Wiederanfahren einzelner Organe nach einer Betriebsunterbrechung ohne Überlast gewährleistet ist.

Die zuvor genannte Aufgabe wird bei einer Kolbensammelpresse mit zwei vom Getriebegehäuse ausgehenden Abtriebswellen dadurch gelöst, daß die der Abtriebswelle für den Raffer zugeordnete Überlastkupplung eine keilschaltkupplung ist, die bei vorbestimmbarem Drehmoment ausschaltet und erst nach Absenken der Abtriebswellendrehzahl auf einen vorgegebenen Wert wieder einschaltet und die der Abtriebswelle für die Zubringerorgane zugeordnete Überlastkupplung wieder einschaltet, sobald die Rafferkupplung einschaltet und der Raffer seine für den ordnungsgemäßen Betrieb erforderliche Drehzahl erreicht hat. Es hat sich als vorteilhaft herausgestellt, daß dem Raffer ein beim Ausschalten der keilschaltkupplung aktivierter Drehzahlwächter zugeordnet ist, der beim Absinken der Betriebsdrehzahl der Kupplung für die Zubringerorgane ausschaltet und diese erst wieder einschaltet, wenn der Raffer nach Absinken seiner Drehzahl wieder seine Betriebsdrehzahl erreicht hat. Die Kupplung für die Zubringerorgane kann eine Elektromagnetkupplung sein. In einigen Fällen hat es sich aber als günstig erwiesen, wenn diese Kupplung eine hydraulisch schaltbare Kupplung ist. Selbstverständlich kann auch eine mechanisch schaltbare Kupplung verwendet werden.

Alternativ kann die erfindungsgemäße Kolbensammelpresse, bei welcher den von dem Getriebegehäuse ausgehenden Wellen zum Antrieb des Raffers und zum Antrieb der vorgeschalteten Zubringerorgane je eine Überlastkupplung zugeordnet ist mit Vorteil auch so ausgebildet sein, daß der den Raffer antreibenden Welle ein Drehzahl- und/oder Drehmomentenwächter zugeordnet ist, über den bei Überschreitung eines voreingestellten Wertes der Antrieb der Zubringerorgane bei Überlastung des Raffers ausschaltet, so daß der Raffer das vor ihm aufgestaute Gut abbauen kann, ohne daß weiteres nachgeliefert wird. Sollte das Gut aber so stark gestaut sein, daß sich der Raffer auch bei nicht weiter von den Zubringerorganen zugeführten Gut frei arbeiten kann, ist es zweckmäßig, wenn die der Rafferwelle zugeordnete Überlastkupplung den Antrieb für den Raffer erst unterbricht, nachdem der Drehzahlund/oder Drehmomentenwächter den Antrieb für die Zubringerorgane abgeschaltet hat und der eingestellte Grenzwert weiter überschritten wird. Auf diese Weise werden Schäden am Raffer wirksam vermieden.

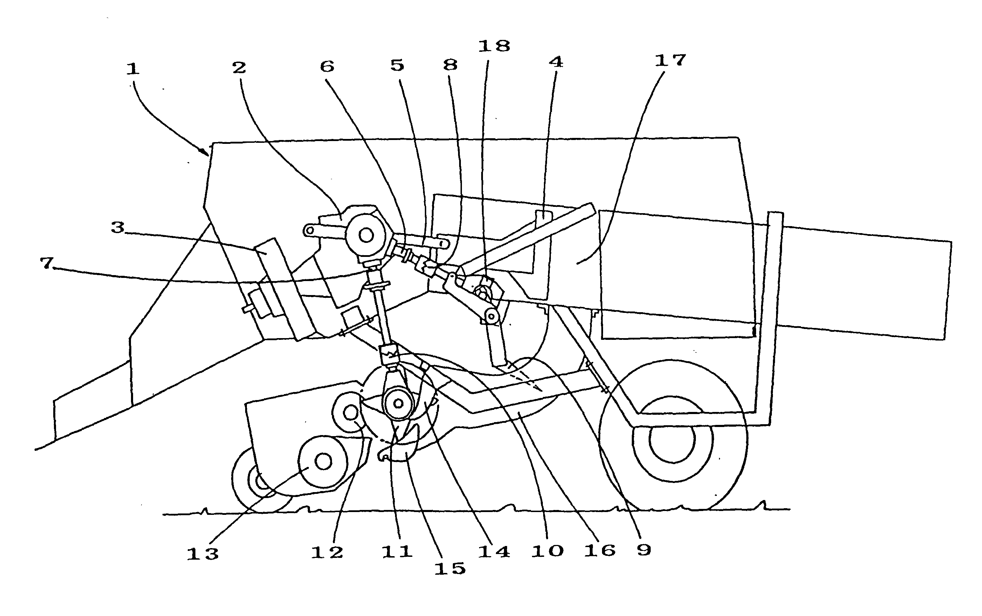

Im folgenden soll die Erfindung anhand eines Ausführungsbeispieles und einer einzigen dieses schematische darstellender Figur näher erläutert werden. Dabei ist die Gesamtpresse mit dem Bezugszeichen 1 versehen. Sie weist ein Getriebe 2 auf, das über seine Eingangswelle mit einem Schwungrad 3, gegebenenfalls unter Zwischenschaltung einer Überlastkupplung, verbunden ist. Das Schwungrad 3 wird in bekannter Weise von einem nicht dargestellten Zugfahrzeug für die Presse 1 angetrieben. Ausgehend von dem Getriebe 2 wird der Kolben 4 zyklisch über einen Kurbeltrieb 5 hin und her bewegt. Neben dem Kurbeltrieb 5 weist das Getriebe zwei Abtriebswellen 6 + 7 auf. Die Abtriebswelle 6 dient unter Zwischenschaltung einer Keilschaltkupplung 8 zum Antrieb des Raffers 9, während die Abtriebswelle 7 unter Zwischenschaltung einer Elektromagnetkupplung 10 dem Antrieb des Schneidrotors 11 dient. Mit dem Schneidrotor 11 sind die Sammelschnecke 12 und die Pick up 13 antriebsmäßig verbunden. Dem Schneidrotor 11 sind in an sich bekannter Weise Abstreifer 14 und Gegenmesser 15 zugeordnet, wobei die Gegenmesser 15 bei Bedarf Außereingriff bringbar sind. Während des Betriebes wird von den Zubringerorganen 11 bis 13 kontinuierlich Gut in den Kanal 16 gefördert. Das in dem Kanal 16 befindliche Gut wird von dem Raffer 9 zyklisch in den Preßkanal 17 gefördert, wo das Gut vom Kolben 4 verdichtet wird. Die Bewegungen von Kolben 4 und Raffer 9 sind dabei derart aufeinander abgestimmt, daß stets dann Erntegut in den Preßkanal 17 gefördert wird, wenn der Kolben 4 seine in der Figur dargestellte zurückgezogene Lage einnimmt und die Öffnung von Kanal 16 zum Preßkanal 17 freigibt. Staut sich nun das Gut im Kanal 16 wächst das Drehmoment zum Antrieb des Raffers 9 an. Hat dieses Drehmoment einen vorbestimmten Wert erreicht, schaltet die Keilschaltkupplung 8 ab. In diesem Moment sackt die Drehzahl des Raffers 9 ab. Der dem Raffer 9 zugeordnete Drehzahlwächter 18 gibt ein Signal an die Elektromagnetkupplung 10, so daß auch diese die Antriebsverbindung vom Getriebe 2 zum Schneidrotor 11 unterbricht. Die Keilschaltkupplung 8 ist in bekannter Weise so aufgebaut, daß sie bei Erreichen einer vorbestimmten unteren Drehzahl der Abtriebswelle 6 von beispielsweise 100 Umdrehungen pro Minute wieder einschaltet. Das heißt, der Raffer wird bei dieser Drehzahl wieder in Tätigkeit gesetzt. Die Magnetkupplung 10 bleibt in diesem Anfahrzustand des Raffers 9 allerdings noch geöffnet, und zwar solange, bis der Raffer 9 seine Betriebsdrehzahl von beispielsweise 140 Umdrehungen pro Minute erreicht hat. In diesem Moment wird über den Drehzahlwächter 18 ein Signal ausgesendet, das als Steuersignal zum Einschalten der Elektromagnetkupplung 10 dient. Nach einer Betriebsunterbrechung werden demzufolge die Zubringerorgane 11 bis 13 erst dann wieder eingeschaltet, wenn der Raffer 9 den Kanal 16 leergeräumt hat. Dies bedeutet einerseits, daß der Raffer zunächst lediglich das im Kanal 16 befindliche Gut ausräumen kann, ohne daß weiteres Gut nachgefördert wird. Zum anderen bedeutet dies, daß die Zubringerorgane 11 bis 13 ohne großen Kraftaufwand anfahren können, da nämlich an ihrem abgabeseitigen Ende kein Gutstau mehr vorhanden ist.

Bei dem vorstehend beschriebenen Ausführungsbeispiel sinkt also die Drehzahl des Raffers bis auf 100 Umdrehungen ab, bevor die Keilschaltkupplung 8 wieder einschaltet, Alternativ hierzu kann die Presse aber auch so gefahren werden, daß bei geringfügigem Absacken der Drehzahlen des Raffers wegen seiner Überlastung die Keilschaltkupplung 8 zunächst nicht ausschaltet, sondern vielmehr nur die Elektromagnetkupplung 10 ausgeschaltet wird und zwar gesteuert über den Drehzahlwächter 18, der auch ein Drehmomentenwächter sein kann. Dem Raffer 9 wird hierdurch die Möglichkeit gegeben, den vor ihm liegenden Gutstau abzubauen, ohne daß weiteres Gut zugeführt wird. Dies gelingt in nahezu allen Fällen, so daß nach Erreichen der Rafferbetriebsdrehzahl der Drehzahlwächter ein Signal an die Elektromagnetkupplung gibt und diese eingeschaltet wird. Hierdurch ist eine kontinuierliche Betriebsweise gewährleistet. Sollte der Stau allerdings so fest ein, daß die Drehzahl des Raffers weiter absinkt und/oder das zu übertragende Drehmoment weiter anwächst, unterbricht die Keilschaltkupplung 8 den Antrieb zum Raffer 9.

## Patentansprüche

1. Kolbensammelpresse für landwirtschaftliches Erntegut mit zumindest einem Getriebe, dessen Eingangswelle über eine Schwungmasse mit der Antriebswelle des Zugfahrzeuges verbindbar ist, mit einem Kurbeltrieb zum Antrieb des Presskolbens und mit zwei Abtriebswellen, von denen eine den Raffer und die andere die das Erntegut zum Raffer führenden Zubringerorgane antreibt, wobei die beiden Abtriebswellen unter Zwischenschaltung je einer Überlastkupplung mit dem Getriebe verbunden sind,
und die der Abtriebswelle (7) für die Zubringerorgane (11 bis 13) zugeordnete Überlastkupplung (10) neben ihrer normalen Schutzfunktion für die Zubringerorgane auch dann ausschaltet, wenn die Überlastkupplung (8) für den Raffer (9) ausschaltet
**dadurch gekennzeichnet,**
**daß** die der Abtriebswelle (6) für den Raffer (9) zugeordnete Überlastkupplung (8) eine keilschaltkupplung ist, die bei vorbestimmbarem Drehmoment ausschaltet und erst nach Absenken der Abtriebswellendrehzahl auf einen vorgegebenen Wert wieder einschaltet und dass die Überlastkupplung (10) der Zubringerorgane (11 bis 13) wieder einschaltet, sobald die Rafferkupplung (8) einschaltet und der Raffer seine für den ordnungsgemäßen Betrieb erforderliche Drehzahl erreicht hat.

2. Kolbensammelpresse nach dem Anspruch 1,
**dadurch gekennzeichnet,**
**daß** dem Raffer (9) ein beim Ausschalten der keilschaltkupplung aktivierter Drehzahlwächter (18) zugeordnet ist, der beim Absinken der Betriebsdrehzahl die Kupplung (10) für die Zubringerorgane (11 bis 13) ausschaltet und dieser erst wieder einschaltet, wenn der Raffer (9) nach Absinken seiner Drehzahl wieder seine Betriebsdrehzahl erreicht hat.

3. Kolbensammelpresse nach den Ansprüchen 1 und 2,
**dadurch gekennzeichnet,**
**daß** die Kupplung (10) für die Zubringerorgane (11 bis 13) eine Elektromagnetkupplung ist.

4. Kolbensammelpresse nach den Ansprüchen 1 und 2,
**dadurch gekennzeichnet,**
**daß** die Kupplung (10) für die Zubringerorgane (11 bis 13) eine hydraulisch schaltbare Kupplung ist.

5. Kolbensammelpresse nach den Ansprüchen 1 und 2,
**dadurch gekennzeichnet,**
**daß** die Kupplung (10) für die Zubringerorgane (11 bis 13) eine mechanisch schaltbare Kupplung ist.

6. Kolbensammelpresse nach dem Anspruch 1,
**dadurch gekennzeichnet,**
**daß** der den Raffer (9) antreibenden Welle (6) ein Drehzahl- und/oder Drehmomentenwächter (18) zugeordnet ist, über den bei Überscheitung eines voreingestellten Wertes der Antrieb der Zubringerorgane (11 bis 13) ausgeschaltet wird.

7. Kolbensammelpresse nach den Ansprüchen 1 und 6,
**dadurch gekennzeichnet,**
**daß** die der Welle (6) zugeordnete Überlastkupplung (8) den Antrieb für den Raffer (9) erst unterbricht, nachdem der Drehzahl- und/oder Drehmomentenwächter (18) den Antrieb (10) für die Zubringerorgane (11 bis 13) abgeschaltet hat und der eingestellte Grenzwert am Drehzahl- und/oder Drehmomentenwächter (18) bereits überschritten wurde.

## Claims

1. A piston collecting press for agricultural crop material having at least one transmission whose input shaft can be connected by way of a flywheel mass to the drive shaft of the tractor vehicle, a crank assembly for driving the press piston and two output shafts of which one drives the gathering device and the other drives the feeder members guiding the crop material to the gathering device, wherein the two output shafts are connected to the transmission with the interposition of a respective overload coupling, and the overload coupling (10) associated with the output shaft (7) for the feeder members (11 to 13) besides its normal protective function for the feeder members also disengages when the overload coupling (8) for the gathering device (9) disengages, **characterised in that** the overload coupling (8) associated with the output shaft (6) for the gathering device (9) is a vee-jaw shift clutch which disengages at a predetermined torque and which engages again only after the output shaft speed falls to a predetermined value and that the overload coupling (10) of the feeder members (11 to 13) engages again as soon as the gathering device coupling (8) engages and the gathering device has reached its speed required for regular operation.

2. A piston collecting press according to claim 1 **characterised in that** associated with the gathering device (9) is a rotary speed monitor (18) which is activated upon disengagement of the vee-jaw shift clutch and which disengages the coupling (10) for the feeder members (11 to 13) when the operating speed of rotation falls and engages same again only when the gathering device (9), after a fall in its rotary speed, has reached its operating speed again.

3. A piston collecting press according to claims 1 and 2 **characterised in that** the coupling (10) for the feeder members (11 to 13) is an electromagnetic clutch.

4. A piston collecting press according to claims 1 and 2 **characterised in that** the coupling (10) for the feeder members (11 to 13) is a hydraulically shiftable clutch.

5. A piston collecting press according to claims 1 and 2 **characterised in that** the coupling (10) for the feeder members (11 to 13) is a mechanically shiftable clutch.

6. A piston collecting press according to claim 1 **characterised in that** associated with the shaft (6) driving the gathering device (9) is a rotary speed and/or torque monitor (18), by way of which the drive for the feeder members (11 to 13) is cut out when a preset value is exceeded.

7. A piston collecting press according to claims 1 and 6 **characterised in that** the overload coupling (8) associated with the shaft (6) only interrupts the drive for the gathering device (9) after the rotary speed and/or torque monitor (18) has cut out the drive (10) for the feeder members (11 to 13) and the set limit value at the rotary speed and/or torque monitor (18) has already been exceeded.

## Revendications

1. Presse-ramasseuse à piston pour produit agricole comprenant au moins un réducteur dont l'arbre d'entrée peut être relié à l'arbre d'entraînement du véhicule tracteur par l'intermédiaire d'une masse d'inertie, un mécanisme à bielle-manivelle pour l'entraînement du piston de presse et deux arbres de sortie parmi lesquels l'un entraîne le peigne et l'autre les organes d'amenée qui amènent le produit récolté au peigne, les deux arbres de sortie étant reliés au réducteur par l'intermédiaire chacun d'un embrayage de surcharge et l'embrayage de surcharge (10) associé à l'arbre de sortie (7) pour les organes d'amenée (11 à 13), en plus de sa fonction normale de protection des organes d'amenée, s'ouvrant lorsque l'embrayage de surcharge (8) pour le peigne (9) s'ouvre,
**caractérisée en ce que**
l'embrayage de surcharge (8) associé à l'arbre de sortie (6) pour le peigne (9) est un embrayage à cône, qui s'ouvre à partir d'un couple prédéterminé et ne se referme que lorsque la vitesse de rotation de l'arbre de sortie a chuté à une valeur prédéterminée et **en ce que** l'embrayage de surcharge (10) associé aux organes d'amenée (11 à 13) se referme dès que l'embrayage de peigne (8) se ferme et que le peigne a atteint sa vitesse de rotation nécessaire pour un fonctionnement correct.

2. Presse-ramasseuse à piston selon la revendication 1, **caractérisée en ce qu'**un dispositif de surveillance de vitesse de rotation (18) qui est activé à l'ouverture de l'embrayage à cône est associé au peigne (9), lequel dispositif de surveillance de vitesse de rotation ouvre l'embrayage (10) pour les organes d'amenée (11 à 13) lors d'une baisse de la vitesse de rotation de fonctionnement et ne referme ledit embrayage que lorsque le peigne (9) a de nouveau atteint sa vitesse de fonctionnement à la suite d'un abaissement de sa vitesse de rotation.

3. Presse-ramasseuse à piston selon les revendications 1 et 2, **caractérisée en ce que** l'embrayage (10) pour les organes d'amenée (11 à 13) est un embrayage électromagnétique.

4. Presse-ramasseuse à piston selon les revendications 1 et 2, **caractérisée en ce que** l'embrayage (10) pour les organes d'amenée (11 à 13) est un embrayage à commande hydraulique.

5. Presse-ramasseuse à piston selon les revendications 1 et 2, **caractérisée en ce que** l'embrayage (10) pour les organes d'amenée (11 à 13) est un embrayage à commande mécanique.

6. Presse-ramasseuse à piston selon la revendication 1, **caractérisée en ce qu'**un dispositif de surveillance de vitesse de rotation et/ou de couple (18) est associé à l'arbre (6) entraînant le peigne (9), dispositif de surveillance par lequel l'entraînement des organes d'amenée (11 à 13) est coupé en cas de dépassement d'une valeur préréglée.

7. Presse-ramasseuse à piston selon les revendications 1 et 6, **caractérisée en ce que** l'embrayage de surcharge (8) associé à l'arbre de sortie (6) coupe l'entraînement pour le peigne (9) seulement après que le dispositif de surveillance de la vitesse de rotation et/ou du couple (18) a coupé l'entraînement (10) pour les organes d'amenée (11 à 13) et que la valeur seuil réglée dans le dispositif de surveillance de la vitesse de rotation et/ou du couple (18) a été dépassée.
